# EUROPÄISCHE PATENTSCHRIFT

(11) **EP 4 363 282 B1**
(45) Veröffentlichungstag und Bekanntmachung des Hinweises auf die Patenterteilung: **19.08.2026**
(21) Anmeldenummer: 22734545.1
(22) Anmeldetag: 10.06.2022
(51) Int. Cl.: B60S 13/00, B25J 5/00, B66F 9/06, G06Q 10/08

(54) **MODULARES ROBOTERSYSTEM UND VERFAHREN ZUM TRANSPORTIEREN EINES OBJEKTES**
MODULAR ROBOT SYSTEM AND METHOD FOR TRANSPORTING AN OBJECT
SYSTÈME ROBOTIQUE MODULAIRE ET PROCÉDÉ DE TRANSPORT D'UN OBJET

(30) Priorität: 28.06.2021 DE 102021206689
(43) Veröffentlichungstag der Anmeldung: 08.05.2024
(73) Patentinhaber: VOLKSWAGEN AKTIENGESELLSCHAFT, 38440 Wolfsburg (DE)
(72) Erfinder: TORO RAMOS, Juan Mauricio, 38102 Braunschweig (DE)
(86) Internationale Anmeldenummer: PCT/EP2022/065849
(87) Internationale Veröffentlichungsnummer: WO 2023/274689

(56) Entgegenhaltungen:
- WO-A1-2019/049404
- DE-A1- 102019 129 771
- JP-A- 2019 048 689
- JP-A- 2021 071 022
- ANONYMOUS: "Avert - autonome Auspark-Roboter (Herstellervideo) - Video.Golem.de", 29 April 2015 (2015-04-29), XP055962141, Retrieved from the Internet <URL:https://video.golem.de/wissenschaft/15201/avert-autonome-auspark-roboter-herstellervideo.html>

## Beschreibung

Die Erfindung betrifft ein modulares Robotersystem gemäß Anspruch 1 und ein Verfahren gemäß Anspruch 5 zum Transportieren eines Objektes.

Mit fortschreitender Automatisierung kommen auch Robotersysteme zum Bewegen von Objekten zum Einsatz. Insbesondere kommen hierbei vermehrt halbautonome oder autonome Robotersysteme zum Einsatz. Auch beim automatisierten Transportieren von Fahrzeugen können solche Robotersysteme zum Einsatz kommen.

Aus der DE 10 2015 203 506 A1 ist eine automobile Transporteinheit, insbesondere ein Transportautomat, zum Positionieren von Stellfahrzeugen, für eine Positionierflotte eines Parksystems für einen Parkraum bekannt, wobei die Transporteinheit derart ausgebildet ist, dass mittels der Transporteinheit in Alleinstellung oder in Koordination mit einer einzigen zusätzlichen Transporteinheit oder in Kooperation mit einer Mehrzahl von zusätzlichen Transporteinheiten, ein betreffendes Stellfahrzeug auf einer Stellfläche des Parkraums und/oder ein betreffendes Stellfahrzeug auf einer Übergabefläche für das Parksystem positionierbar ist. Ferner ist ein Verfahren zum automatischen Positionieren, insbesondere zum automatischen Ein- und/oder Ausparken, von Stellfahrzeugen für ein Parksystem bekannt, wobei ein betreffendes Stellfahrzeug durch wenigstens eine automobile Transporteinheit, insbesondere einen Transportautomat, auf einer Stellfläche eines Parkraums und/oder auf einer Übergabefläche für das Parksystem positioniert wird.

Aus der DE 10 2018 221 167 A1 sind ein Parkrobotersystem für ein Kraftfahrzeug mit mehreren Rädern sowie ein Verfahren zum Betreiben eines derartigen Parkrobotersystems bekannt. Das Parkrobotersystem umfasst einen Hauptroboter und mehrere Nebenroboter, wobei die Nebenroboter jeweils ein Paar Radauflagearme aufweisen und jeweils dazu ausgelegt sind, mit eingeklappten Radauflagearmen von außen neben jeweils eines der Räder des Kraftfahrzeugs autonom heranzufahren. Zudem sind die Nebenroboter jeweils dazu ausgelegt, das jeweilige Rad durch Ausklappen des jeweiligen Paars der Radauflagearme anzuheben. Der Hauptroboter ist nun dazu ausgelegt, die Nebenroboter mit dem angehobenen Kraftfahrzeug während einer Fahrt zu einer vorgegebenen Zielposition zu begleiten.

Aus https://video.golem.de/wissenschaft/15201/avert-autonome-auspark-roboter-herstellervideo.html ist das Video "Avert - autonome Auspark-Roboter (Herstellervideo) - Video.Golem.de", ohne Autorenangabe, 29. April 2019, bekannt, welches einen Ausparkroboter mit mehreren Robotereinheiten zeigt.

Die DE 10 2019 129 771 A1 beschreibt ein selbstfahrendes Transportmodul mit einer Plattform, die eine erste Transportoberfläche umfasst, und einem bodengestützten Fahrwerk mit mindestens drei Rädern, wobei jedem der Räder eine Radverbindung und ein Fahr-Dreh-Hub-Modul zugeordnet ist, wobei jedes der Fahr-Hub-Module einen ersten Elektromotor umfasst, der ausgebildet ist, eine Drehbewegung des zugehörigen Rads um eine Mittelachse des Rads auszuführen, und einen zweiten Elektromotor, der ausgebildet ist, eine Höhenverstellung der Plattform durch die dem Fahr-Hub-Modul zugeordneten Radverbindung auszuführen, wobei jeder der ersten und zweiten Elektromotoren einzeln ansteuerbar ausgebildet ist. Weiter ist ein selbstfahrendes Transportmodul mit Fahr-Dreh-Modulen und einer höhenverstellbare Ebene mit Verbindungsvorrichtungen beschrieben. Die Verbindungsvorrichtungen können jeweils einen zusätzlichen Elektromotor für eine Höhenverstellung der höhenverstellbaren Ebene umfassen.

Die JP 2019 048 689 A beschreibt ein Transportsystem, dieses umfasst eine Bewegungsplanverwaltungseinheit, die Bewegungsplaninformationen einer Vielzahl von Transportmitteln verwaltet, und mindestens eines der Vielzahl von Transportmitteln verfügt über eine erste Kommunikationseinheit, die die Bewegungsplaninformationen von der Bewegungsplanverwaltungseinheit empfängt. Das Transportmittel umfasst: eine Antriebseinheit; eine Einheit zum Erfassen von Informationen zum Zustand des Transportmittels, die Informationen zum Zustand des Transportmittels erfasst, darunter mindestens eine Position, eine Transportrichtung, eine Transportgeschwindigkeit, eine Leistung und eine verbleibende Batterieladung; eine zweite Kommunikationseinheit, die die Informationen zum Zustand des Transportmittels, die Bewegungsplaninformationen und Informationen zur Funktionszuweisung an das andere Transportmittel in der Vielzahl von Transportmitteln überträgt und von diesem empfängt; und eine Funktionssteuereinheit, die die Ausführung der zugewiesenen Funktion auf der Grundlage der Informationen zur Funktionszuweisung steuert. Mindestens eine der Vielzahl von Transportmitteln weist die Funktionszuweisungseinheit auf, die auf Grundlage der Bewegungsplaninformationen und der Transportmittelzustandsinformationen von den Vielzahl von Transportmitteln auszuführende Funktionen zuweist und Funktionszuweisungsinformationen erzeugt.

Die JP 2021 071 022 A beschreibt ein Fahrzeugtransportsystem mit einer Vielzahl von Transportgeräten.

Der Erfindung liegt die Aufgabe zu Grunde, ein modulares Robotersystem zum Transportieren eines Objektes, eine Robotereinheit für ein modulares Robotersystem und ein Verfahren zum Transportieren eines Objektes zu verbessern.

Die Aufgabe wird erfindungsgemäß durch ein modulares Robotersystem mit den Merkmalen des Patentanspruchs 1, und ein Verfahren mit den Merkmalen des Patentanspruchs 5 gelöst. Vorteilhafte Ausgestaltungen der Erfindung ergeben sich aus den Unteransprüchen.

Insbesondere wird in der Erfindung ein modulares Robotersystem zum Transportieren eines Objektes geschaffen, umfassend mindestens zwei autonome Robotereinheiten, wobei die mindestens zwei autonomen Robotereinheiten jeweils mindestens einen Antrieb und mindestens ein Verbindungsmittel zum Verbinden mit dem Objekt aufweisen, wobei die mindestens zwei autonomen Robotereinheiten ferner jeweils mindestens ein Koppelmittel aufweisen, mit denen die mindestens zwei autonomen Robotereinheiten mit zumindest einer anderen autonomen Robotereinheit gekoppelt werden können, um eine Robotersystem-Einheit auszubilden, und wobei Steuereinrichtungen der mindestens zwei autonomen Robotereinheiten dazu eingerichtet sind, sich nach Bedarf alleine oder im Verbund mit anderen Steuereinrichtungen auf das Steuern und/oder Regeln einer nicht gekoppelten und/oder nicht verbundenen Robotereinheit oder der ausgebildeten Robotersystem-Einheit oder einer nach Verbinden mit dem Objekt ausgebildeten Roboter-Objekt-Einheit umzustellen, und hierzu eine Steuer- und/oder Regelstrategie umzustellen, wobei die Steuereinrichtungen ferner dazu eingerichtet sind, die Robotereinheiten zum Transportieren des Objektes derart anzusteuern und/oder zu regeln, dass in Bezug auf eine ausgebildete Robotersystem-Einheit das Ausbilden und Lösen von Kopplungen der Robotereinheiten untereinander und das Ausbilden und Lösen von Verbindungen der jeweiligen Robotereinheiten mit dem Objekt an vorgegebenen Verbindungspositionen nach einer vorgegebenen Reihenfolge erfolgt.

Es wird insbesondere eine Robotereinheit für ein modulares Robotersystem nach dem ersten Aspekt geschaffen, umfassend mindestens einen Antrieb, mindestens ein Verbindungsmittel, eingerichtet zum Verbinden mit einem zu transportierenden Objekt, mindestens ein Koppelmittel, eingerichtet zum Koppeln mit einem Koppelmittel mindestens einer anderen Robotereinheit des modularen Robotersystems, und eine Steuereinrichtung, wobei die Steuereinrichtung dazu eingerichtet ist, sich nach Bedarf alleine oder im Verbund mit anderen Steuereinrichtungen auf das Steuern und/oder Regeln der nicht gekoppelten und/oder nicht verbundenen Robotereinheit oder einer ausgebildeten Robotersystem-Einheit oder einer nach Verbinden mit dem Objekt ausgebildeten Roboter-Objekt-Einheit umzustellen, wobei die Steuereinrichtung ferner dazu eingerichtet ist, die Robotereinheit derart anzusteuern und/oder zu regeln, dass in Bezug auf eine ausgebildete Robotersystem-Einheit das Ausbilden und Lösen von Kopplungen der Robotereinheit mit mindestens einer anderen Robotereinheit und das Ausbilden und Lösen einer Verbindung der Robotereinheit mit dem Objekt an einer vorgegebenen Verbindungsposition nach einer vorgegebenen Reihenfolge erfolgt.

Ferner wird gemäß der Erfindung ein Verfahren zum Transportieren eines Objektes zur Verfügung gestellt, wobei mindestens zwei autonome Robotereinheiten eines modularen Robotersystems mittels Antrieben der mindestens zwei mobilen Robotereinheiten automatisiert zu dem Objekt gefahren werden, wobei die mindestens zwei autonomen Robotereinheiten hierzu über Koppelmittel miteinander zu einer Robotersystem-Einheit gekoppelt sind oder gekoppelt werden, wobei die mindestens zwei mobilen Robotereinheiten nach einer vorgegebenen Reihenfolge jeweils mittels mindestens eines Verbindungsmittels an vorgegebenen Verbindungspositionen mit dem Objekt verbunden werden, wobei eine hierdurch ausgebildete Roboter-Objekt-Einheit automatisiert an einen Zielort gefahren wird, wobei die Verbindungen der mindestens zwei autonomen Robotereinheiten zum Objekt am Zielort unter Berücksichtigung der vorgegebenen Reihenfolge wieder gelöst werden und die mindestens zwei autonomen Robotereinheiten wieder zur Robotersystem-Einheit gekoppelt werden, wobei die Robotersystem-Einheit von dem Fahrzeug weg gefahren wird, und wobei Steuereinrichtungen der mindestens zwei autonomen Robotereinheiten nach Bedarf alleine oder im Verbund mit anderen Steuereinrichtungen auf das Steuern und/oder Regeln der nicht gekoppelten und/oder nicht verbundenen Robotereinheiten oder einer ausgebildeten Robotersystem-Einheit oder einer nach Verbinden mit dem Objekt ausgebildeten Roboter-Objekt-Einheit umgestellt werden.

Das modulare Robotersystem, die Robotereinheit und das Verfahren ermöglichen es, ein kooperativ arbeitendes modulares Robotersystem bereitzustellen. Hierbei ist einer der Grundgedanken der Erfindung, die Robotereinheiten mit Koppelmitteln auszustatten, sodass eine Robotereinheit mit einer oder mehreren anderen Robotereinheiten eine mechanische Verbindung eingehen kann. Dies ermöglicht es, die mindestens zwei Robotereinheiten im gekoppelten Zustand zu dem zu transportierenden Objekt zu fahren und nach einem Transport des Objektes an einen Zielort auch wieder im gekoppelten Zustand von dem Objekt wegzufahren. Am Objekt werden die miteinander gekoppelten Robotereinheiten vor dem Transportieren des Objektes in einer vorgegebenen Reihenfolge einzeln oder gruppenweise voneinander abgekoppelt und jeweils an vorgegebene Verbindungspositionen über das jeweilige Verbindungsmittel mit dem Objekt verbunden. Ein Vorteil hiervon ist, dass die Robotereinheiten einfacher ausgestaltet sein können. Insbesondere muss nicht jede Robotereinheit die gleichen kinematischen Eigenschaften aufweisen. Insbesondere kann eine Anzahl von Freiheitsgraden einzelner Robotereinheiten eingeschränkt sein, da der Hin- und Abtransport zu bzw. von dem Objekt im Verbund mit anderen Robotereinheiten als Robotersystem-Einheit durchgeführt wird. Da die Robotereinheiten hinsichtlich ihrer kinematischen Eigenschaften bzw. Freiheitsgrade einfacher ausgestaltet sein können, können Aufwand und Kosten eingespart werden.

Die Steuereinrichtungen der mindestens zwei autonomen Robotereinheiten werden nach Bedarf alleine oder im Verbund mit anderen Steuereinrichtungen auf das Steuern und/oder Regeln der nicht gekoppelten und/oder nicht verbundenen Robotereinheiten oder einer ausgebildeten Robotersystem-Einheit oder einer nach Verbinden mit dem Objekt ausgebildeten Roboter-Objekt-Einheit umgestellt. Im gekoppelten Zustand der mindestens zwei Robotereinheiten werden hierbei insbesondere die aufgrund der Kopplung geänderten kinematischen Eigenschaften der Robotersystem-Einheit berücksichtigt, insbesondere eine geänderte Anzahl von Freiheitsgraden. Ebenso werden im verbundenen Zustand der mindestens zwei Robotereinheiten mit dem Objekt insbesondere die aufgrund der Verbindung geänderten kinematischen Eigenschaften der Roboter-Objekt-Einheit berücksichtigt, insbesondere eine geänderte Anzahl von Freiheitsgraden. Insbesondere kann hierzu ein der Steuerung und/oder Regelung zugrunde liegendes kinematisches Modell ausgewählt und/oder angepasst werden.

Ein Vorteil des modularen Robotersystems und des Verfahren ist, dass Robotereinheiten flexibel und spezialisiert für eine Transportaufgabe, das heißt, in Abhängigkeit von Eigenschaften des Objektes und eines zu absolvierenden Transportweges, zusammengestellt werden können.

Ein weiterer Vorteil des modularen Robotersystems und des Verfahrens ist, dass ein zu transportierendes Objekt einen integralen Bestandteil der ausgebildeten Roboter-Objekt-Einheit ausbilden kann und hierbei insbesondere als eine Art mechanische Trägerstruktur wirken kann. Hierdurch kann eine Flexibilität des modularen Robotersystems weiter erhöht werden, da sich individuelle Lösungen zum Transportieren eines Objektes unter Berücksichtigung der Objekteigenschaften maßschneidern lassen.

Die Robotereinheiten können jeweils eine Sensorik zur Umfelderfassung und/oder eine Navigationseinrichtung zur autonomen Navigation und/oder Trajektorienplanung aufweisen. Ferner weisen die Robotereinheiten insbesondere einen Energiespeicher zum Bereitstellen von Energie auf.

Ein Verbindungsmittel kann insbesondere Greif-, Klemm- und/oder Rastmittel aufweisen, mit denen eine mechanisch lösbare Verbindung zum Objekt ausgebildet werden kann. Es kann alternativ oder zusätzlich vorgesehen sein, dass ein Verbindungsmittel eine Verbindungsschnittstelle aufweist, welche mit einer komplementär ausgebildeten Verbindungsschnittstelle an dem Objekt mechanisch lösbar verbunden werden kann. Das Verbindungsmittel kann insbesondere eine Aktorik aufweisen, welche zum Ausbilden und/oder Lösen der Verbindung mit dem Objekt gesteuert betätigt werden kann. Die Verbindung zwischen einer autonomen Robotereinheit und dem Objekt ist insbesondere mechanisch fest ausgebildet, das heißt das Objekt hat zu der betrachteten autonomen Robotereinheit keine Bewegungsfreiheit und kann sich relativ zu diesem nach dem Verbinden nicht bewegen, sondern ist insbesondere starr mit diesem verbunden. Es ist jedoch grundsätzlich auch möglich, dass die Verbindung bzw. ein Verbindungsmittel zumindest in einem vorgegebenen Bereich bzw. Umfang relative Bewegungen zwischen dem Objekt und einer Robotereinheit ermöglicht, wobei die Verbindung eine ausreichende, insbesondere auf eine jeweilige Transportaufgabe angepasste, Steifigkeit aufweisen kann. Eine Verbindung bzw. ein Verbindungsmittel kann beispielsweise mindestens ein Drehgelenk aufweisen.

Ein Verbindungsmittel kann jedoch auch mindestens eine Ausgleichseinrichtung aufweisen, mit der Relativbewegungen zwischen einer Robotereinheit und einem hiermit verbundenen Objekt ausgeglichen werden können, beispielsweise über mindestens ein hierfür eingerichtetes Dämpfungselement.

Ein Koppelmittel kann insbesondere Greif-, Klemm- und/oder Rastmittel aufweisen, mit denen eine mechanisch lösbare Verbindung zwischen Robotereinheiten ausgebildet werden kann. Ferner können auch magnetisch arbeitende Elemente beim Koppeln vorgesehen sein. Es kann alternativ oder zusätzlich vorgesehen sein, dass ein Koppelmittel eine Koppelschnittstelle aufweist, welche mit einer komplementär ausgebildeten Koppelschnittstelle an einer anderen Robotereinheit mechanisch lösbar verbunden werden kann. Das Koppelmittel kann insbesondere eine Aktorik aufweisen, welche zum Ausbilden und/oder Lösen der Kopplung mit der jeweils anderen Robotereinheit gesteuert betätigt werden kann. Die Verbindung zwischen einer autonomen Robotereinheit und der jeweils anderen autonomen Robotereinheit ist insbesondere mechanisch fest ausgebildet, das heißt die gekoppelten autonomen Robotereinheiten haben keine Bewegungsfreiheit und können sich relativ zueinander nach dem Verbinden nicht bewegen, sondern sind insbesondere starr miteinander verbunden.

Zum Ausbilden und Lösen und nach dem Ausbilden der Robotersystem-Einheit und der Roboter-Objekt-Einheit ist insbesondere vorgesehen, dass die Steuereinrichtungen der mindestens zwei autonomen Robotereinheiten signaltechnisch miteinander gekoppelt werden bzw. gekoppelt sind. Hierzu weisen die Robotereinheiten insbesondere (drahtlose) Kommunikationsschnittstellen auf, mit denen die Steuereinrichtungen eine Kommunikationsverbindung herstellen können, sodass insbesondere ein koordiniertes Steuern und/oder Regeln möglich ist.

Es kann vorgesehen sein, dass eine Steuerung und/oder Regelung der Robotersystem-Einheit und/oder der Roboter-Objekt-Einheit von einer der Steuereinrichtungen der mindestens zwei autonomen Robotereinheiten alleine durchgeführt wird. Es kann aber auch vorgesehen sein, dass eine Koordination der Steuereinrichtungen erfolgt, sodass ein gemeinsames Steuern und/oder Regeln der Robotereinheiten im Verbund und im Verbund mit dem Objekt erfolgen kann.

Eine Steuer- und/oder Regelstrategie wird insbesondere unter Berücksichtigung von kinematischen Eigenschaften der Antriebe der mindestens zwei autonomen Robotereinheiten in der jeweiligen Konfiguration (einzeln, Robotersystem-Einheit und Roboter-Objekt-Einheit) umgestellt.

Das Objekt soll insbesondere zumindest in Bezug auf eine Beziehung von Verbindungspunkten der mindestens zwei autonomen Robotereinheiten zueinander ein starres Objekt sein, sodass das Objekt einen mechanisch stabilen und während eines Transportes hinsichtlich seiner Abmessungen und mechanischen Eigenschaften unveränderlichen Teil der Roboter-Objekt-Einheit bilden kann.

Es ist insbesondere vorgesehen, dass eine Anfahrt zum Objekt und eine Abfahrt vom Objekt als Robotersystem-Einheit durchgeführt wird. Insbesondere werden die Robotereinheiten hierzu in der Nähe des Objekts in der vorgegebenen Reihenfolge von der Robotersystem-Einheit abgekoppelt und mit dem Objekt an den vorgegebenen Verbindungspositionen verbunden. Entsprechend werden die Robotereinheiten auch in der Nähe des Objektes nach dem Lösen der jeweiligen Verbindung zum Objekt wieder miteinander gekoppelt.

Ein Antrieb kann insbesondere mindestens ein Mecanum-Rad und/oder mindestens ein Omni-Rad und/oder mindestens ein WESN^{®}-Rad aufweisen. Ein Antrieb kann auch mehr als ein Rad umfassen, das angetrieben ist oder angetrieben wird. Grundsätzlich kann ein Antrieb auch mindestens ein passives, das heißt, nicht angetriebenes, Rad umfassen. Ein Antrieb kann auch mindestens eine aktiv lenkbare oder nicht-aktiv lenkbare Lenkrolle (Castor-Rolle/Castor-Rad) aufweisen. Eine Lenkung kann auch in Form einer Differentiallenkung erfolgen. Ein Antrieb umfasst insbesondere mindestens einen Motor und/oder Aktor. Grundsätzlich kann ein Antrieb auch eine umlaufende Kette aufweisen. Neben den angetriebenen Rädern kann eine Robotereinheit auch ein oder mehrere passive (Stütz-)Räder aufweisen, welche insbesondere einer mechanischen Stabilität dienen.

Die Steuereinrichtungen können einzeln oder zusammengefasst als eine Kombination von Hardware und Software ausgebildet sein, beispielsweise als Programmcode, der auf einem Mikrocontroller oder Mikroprozessor ausgeführt wird. Es kann jedoch auch vorgesehen sein, dass Teile einzeln oder zusammengefasst als anwendungsspezifische integrierte Schaltung (ASIC) und/oder feldprogrammierbares Gatterfeld (FPGA) ausgebildet sind. Insbesondere weist jede Steuereinrichtung mindestens eine Recheneinrichtung (z.B. Mikroprozessor) und mindestens einen Speicher auf.

In einer Ausführungsform ist vorgesehen, dass die vorgegebene Reihenfolge unter Berücksichtigung von kinematischen Eigenschaften der jeweiligen Antriebe der mindestens zwei autonomen Robotereinheiten festgelegt ist. Dies ermöglicht es, im Hinblick auf kinematische Eigenschaften, insbesondere auf jeweilige Freiheitsgrade, besonders einfach ausgestaltete Robotereinheiten zu verwenden. Lässt sich eine Robotereinheit beispielsweise durch ihren Antrieb nur in eine Richtung aktiv bewegen, passiv jedoch in beliebige Richtungen, so kann diese Robotereinheit von einer anderen mit dieser zur Robotersystem-Einheit gekoppelten Robotereinheit auch in andere Richtungen bewegt werden, wenn diese in die gewünschte Richtung aktiv angetrieben werden kann. Die beschränkte Robotereinheit wird dann durch die andere Robotereinheit vor die bzw. an der für diese Robotereinheit vorgesehene Verbindungsposition angeordnet. Die angeordnete Robotereinheit wird anschließend von der Robotersystem-Einheit abgekoppelt und fährt (in der einzig möglichen aktiven Bewegungsrichtung) zur Verbindungsposition und verbindet sich mittels des Verbindungsmittels mit dem Objekt.

Es ist vorgesehen, dass die mindestens zwei autonomen Robotereinheiten sich zumindest gruppenweise in mindestens einer kinematischen Eigenschaft voneinander unterscheiden. Hierdurch kann das modulare Robotersystem insbesondere als heterogenes Robotersystem ausgebildet sein. Ein solches heterogenes Robotersystem zeichnet sich insbesondere dadurch aus, dass mindestens eine der verwendeten autonomen Robotereinheiten sich im Vergleich zu den restlichen verwendeten autonomen Robotereinheiten in mindestens einer Eigenschaft von diesen unterscheidet. Eine solche unterschiedliche Eigenschaft ist insbesondere eine kinematische Eigenschaft. Zusätzlich kann auch eine Eigenschaft des mindestens einen Verbindungsmittels unterschiedlich sein. Die Möglichkeit, das modulare Robotersystem in heterogener Weise auszubilden, hat den Vorteil, dass eine Flexibilität beim Ausbilden der Roboter-Objekt-Einheit erhöht werden kann. Insbesondere können auf diese Weise verbesserte maßgeschneiderte Lösungen für komplexe Transportprobleme bereitgestellt werden. Ferner können die Robotereinheiten durch die Möglichkeit des Ausbildens der Robotersystem-Einheit insgesamt einfacher und somit kostengünstiger ausgebildet sein, da nicht jede Robotereinheit die gleichen kinematischen Eigenschaften, insbesondere die gleichen Freiheitsgrade aufweisen muss.

Es ist ferner vorgesehen, dass die mindestens eine kinematische Eigenschaft eine Antriebsart des mindestens einen Antriebs der mindestens zwei autonomen Robotereinheiten umfasst. Insbesondere können unterschiedliche Antriebsarten verwendet werden, wie zum Beispiel: mindestens ein Mecanum-Rad und/oder mindestens ein Omni-Rad und/oder mindestens ein WESN^{®}-Rad und/oder mindestens eine aktive oder passive Lenkrolle.

In einer Ausführungsform ist vorgesehen, dass die Reihenfolge derart vorgegeben ist und/oder mindestens eine kinematische Eigenschaft der mindestens zwei autonomen Robotereinheiten derart gewählt ist, dass eine Gesamtanzahl von Antrieben des modularen Robotersystems für zumindest eine Teilmenge der mindestens zwei Robotereinheiten minimiert ist. Hierdurch können Aufwand und Kosten gespart werden. Das Bestimmen der Reihenfolge und/oder der kinematischen Eigenschaften der mindestens zwei autonomen Robotereinheiten kann für eine gegebene Transportaufgabe beispielsweise durch Simulation erfolgen. Hierzu können die Robotereinheiten derart ausgebildet und/oder ausgewählt werden, dass eine Anzahl der Antriebe möglichst klein ist, die Transportaufgabe aber dennoch gelöst werden kann. Die Reihenfolge wird dann derart vorgegeben, dass die einzelnen Robotereinheiten der gewählten Kombination aus Robotereinheiten dennoch an die jeweiligen Verbindungspositionen an dem Objekt bewegt werden können. Insbesondere kann hierbei vorgesehen sein, dass nacheinander einzelne Robotereinheiten oder Teilverbünde der Robotersystem-Einheit abgekoppelt und an die jeweiligen Verbindungsposition bewegt werden.

In einer Ausführungsform ist vorgesehen, dass das Objekt ein Fahrzeug ist, wobei die Steuereinrichtungen dazu eingerichtet sind, die autonomen Robotereinheiten ausgehend von der Robotersystem-Einheit in der vorgegebenen Reihenfolge mit den Rädern des Fahrzeugs zu verbinden. Das Fahrzeug ist insbesondere ein Kraftfahrzeug. Die Verbindungsmittel der Robotereinheiten weisen insbesondere Gabeln, insbesondere schwenkbare Gabeln, auf, die unter den Rädern des Fahrzeugs angeordnet werden können. Die schwenkbaren Gabeln werden insbesondere mittels einer hierfür eingerichteten Aktorik bewegt. Ferner weisen die Robotereinheiten insbesondere jeweils eine mit dem Verbindungsmittel mechanisch verbundene Hebeeinrichtung auf, mit der insbesondere ein Rad des Fahrzeugs, das von den Gabeln unterfasst wurde, angehoben werden kann. Das angehobene Fahrzeug kann dann als Teil der derart ausgebildeten Roboter-Objekt-Einheit von einer Startposition an eine Zielposition transportiert werden.

Weitere Merkmale zur Ausgestaltung der Robotereinheit ergeben sich aus der Beschreibung von Ausgestaltungen des modularen Robotersystems. Die Vorteile der Robotereinheit sind hierbei jeweils die gleichen wie bei den Ausgestaltungen des modularen Robotersystems.

Weitere Merkmale zur Ausgestaltung des Verfahrens ergeben sich aus der Beschreibung von Ausgestaltungen des modularen Robotersystems. Die Vorteile des Verfahrens sind hierbei jeweils die gleichen wie bei den Ausgestaltungen des modularen Robotersystems.

Es kann insbesondere vorgesehen sein, dass die mindestens zwei autonomen Robotereinheiten zum Transportieren des Objektes in Abhängigkeit von Eigenschaften des Objektes und/oder von Eigenschaften eines Transportwegs ausgewählt und/oder angeordnet werden. Hierdurch können ausgehend von einem Fuhrpark von autonomen Robotereinheiten mit unterschiedlichen kinematischen Eigenschaften, insbesondere unterschiedlichen Antriebsarten, jeweils maßgeschneiderte und/oder optimale Lösungen für gegebene Transportaufgaben bereitgestellt werden.

Nachfolgend wird die Erfindung anhand bevorzugter Ausführungsbeispiele unter Bezugnahme auf die Figuren näher erläutert. Hierbei zeigen:
- Fig. 1: eine schematische Darstellung einer Ausführungsform des modularen Robotersystems zum Transportieren eines Objektes;
- Fig. 2a-2f: schematische Darstellungen zur Verdeutlichung eines Ablaufs beim Aufladen eines Fahrzeugs gemäß der vorgegebenen Reihenfolge;
- Fig. 3a-3c: schematische Darstellungen einer weiteren Ausführungsform des modularen Robotersystems;
- Fig. 4a-4e: schematische Darstellungen zur Verdeutlichung von Ausführungsformen von Robotereinheiten und Robotersystem-Einheiten mit unterschiedlichen kinematischen Eigenschaften;
- Fig. 5: ein schematisches Ablaufdiagramm einer Ausführungsform des Verfahrens zum Transportieren eines Objektes.

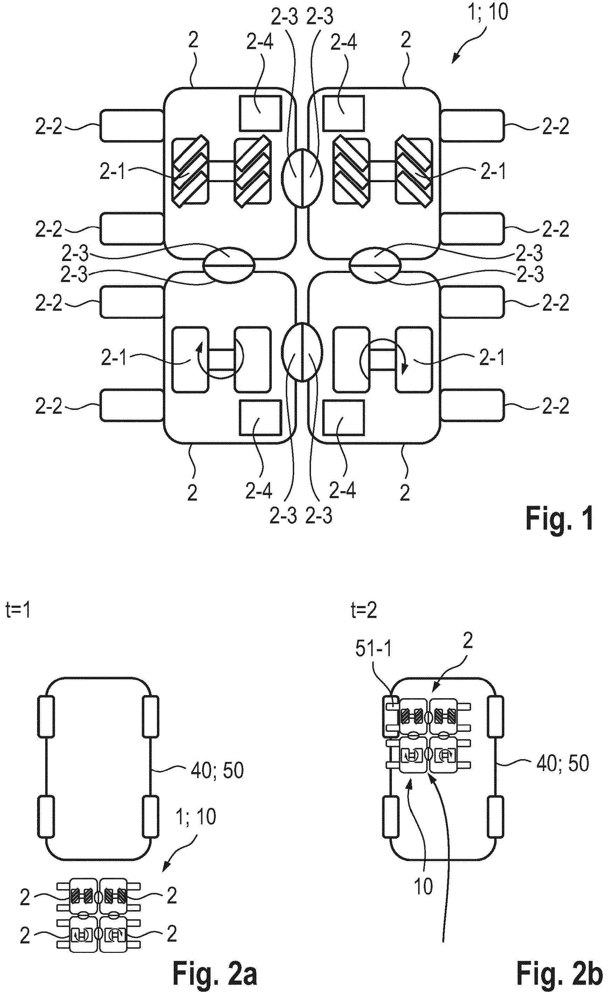

In Fig. 1 ist eine schematische Darstellung einer Ausführungsform des modularen Robotersystems 1 zum Transportieren eines Objektes gezeigt. Das modulare Robotersystem 1 umfasst in der gezeigten Ausführungsform vier Robotereinheiten 2. Jede der Robotereinheiten 2 weist einen Antrieb 2-1, ein Verbindungsmittel 2-2, zwei Koppelmittel 2-3 und eine Steuereinrichtung 2-4 auf.

Der Antrieb 2-1 der in der Darstellung oben gezeigten Robotereinheiten 2 umfasst beispielsweise Mecanum-Räder, der Antrieb 2-1 der unten gezeigten Robotereinheiten 2 umfasst beispielsweise lenkbare Achsen. Es ist daher insbesondere vorgesehen, dass die autonomen Robotereinheiten 2 sich zumindest gruppenweise in mindestens einer kinematischen Eigenschaft voneinander unterscheiden. Insbesondere ist vorgesehen, dass die mindestens eine kinematische Eigenschaft eine Antriebsart des Antriebe 2-1 der autonomen Robotereinheiten 2 umfasst. Die Robotereinheiten 2 sind daher zumindest gruppenweise heterogen ausgebildet.

Grundsätzlich kann der Antrieb 2-1 aber auch anders ausgestaltet sein, insbesondere kann eine Art und/oder eine Anzahl von, insbesondere angetriebenen oder passiven, Rädern des Antriebs 2-1 anders sein. Der Antrieb 2-1 umfasst insbesondere mindestens einen Motor und/oder Aktor zum Antreiben der jeweiligen Robotereinheit 2.

Die Verbindungsmittel 2-2 umfassen jeweils Gabeln zum Unterfassen jeweils eines Rades eines Fahrzeugs, wodurch die Verbindung zum Objekt ausgebildet wird.

Die Koppelmittel 2-3 sind jeweils eingerichtet zum Koppeln mit einem Koppelmittel 2-3 einer anderen Robotereinheit 2 des modularen Robotersystems 1. Jede der Robotereinheiten 2 kann mit zwei anderen Robotereinheiten 2 zu einer Robotersystem-Einheit 10 verbunden werden.

Ferner weisen die Robotereinheiten 2 eine Sensorik (nicht gezeigt) zum Erfassen eines Umfelds, eine Navigationseinrichtung (nicht gezeigt) zum autonomen Navigieren und eine Kommunikationsschnittstelle (nicht gezeigt) zum Kommunizieren mit anderen Robotereinheiten 2 auf.

Die Steuereinrichtungen 2-4 der Robotereinheiten 2 sind dazu eingerichtet, sich nach Bedarf alleine oder im Verbund mit anderen Steuereinrichtungen 2-4 auf das Steuern und/oder Regeln der nicht gekoppelten und/oder nicht verbundenen Robotereinheit 2 oder einer ausgebildeten Robotersystem-Einheit 10 oder einer nach Verbinden mit dem Objekt ausgebildeten Roboter-Objekt-Einheit umzustellen. Das Steuern und/oder Regeln der Robotereinheiten 2, der Robotersystem-Einheit 10 und der Roboter-Objekt-Einheit erfolgt autonom in an sich bekannter Weise, wobei insbesondere ein Umfeld mittels der Sensorik(en) erfasst und ausgewertet wird und jede Robotereinheit 2, die Robotersystem-Einheit 10 oder die Roboter-Objekt-Einheit auf einer ausgehend von einer Transportaufgabe und dem erfassten und ausgewerteten Umfeld autonom zu dem zu transportierenden Objekt gefahren wird. Auch das Transportieren erfolgt autonom. Es kann vorgesehen sein, dass die Robotereinheiten 2 oder die Robotersystem-Einheit 10 Transportaufgaben von einem zentralen Server mitgeteilt bekommt.

Die Steuereinrichtungen 2-4 sind ferner derart ausgebildet, die Robotereinheit 2 derart anzusteuern und/oder zu regeln, dass in Bezug auf eine ausgebildete Robotersystem-Einheit 10 das Ausbilden und Lösen von Kopplungen der Robotereinheiten 2 mit mindestens einer anderen Robotereinheit 2 und das Ausbilden und Lösen einer Verbindung der Robotereinheiten 2 mit dem Objekt, im Beispiel mit dem Fahrzeug, an den jeweils vorgegebenen Verbindungspositionen nach einer vorgegebenen Reihenfolge erfolgt.

Es kann vorgesehen sein, dass die vorgegebene Reihenfolge unter Berücksichtigung von kinematischen Eigenschaften der jeweiligen Antriebe 2-1 der mindestens zwei autonomen Robotereinheiten 2 festgelegt ist. Insbesondere werden hierbei Freiheitsgrade, insbesondere mögliche Bewegungsrichtungen, berücksichtigt. So kann beispielsweise vorgesehen sein, dass zuerst die Robotereinheiten 2 an den Verbindungspositionen angeordnet werden, die über weniger Freiheitsgrade, insbesondere beim aktiven Antreiben, verfügen. Die Robotereinheiten 2 mit mehr Freiheitsgraden, insbesondere beim aktiven Antreiben, können dann den Robotereinheiten 2 mit weniger Freiheitsgraden assistieren und/oder diese aktiv an Verbindungspositionen am Objekt, im Beispiel an Rädern des Fahrzeugs, anordnen.

Es ist vorgesehen, dass die mindestens zwei autonomen Robotereinheiten 2 sich zumindest gruppenweise in mindestens einer kinematischen Eigenschaft voneinander unterscheiden. Hierdurch können eine Komplexität reduziert werden und Kosten eingespart werden.

Es ist ferner vorgesehen, dass die mindestens eine kinematische Eigenschaft eine Antriebsart des mindestens einen Antriebs 2-1 der mindestens zwei autonomen Robotereinheiten 2 umfasst. Beispielhaft weisen die in der Fig. 1 gezeigten Robotereinheiten 2 als Antriebe 2-1 Mecanum-Räder (oben) oder lenkbare Räder (unten) auf.

Es kann vorgesehen sein, dass die Reihenfolge derart vorgegeben ist und/oder mindestens eine kinematische Eigenschaft der mindestens zwei autonomen Robotereinheiten 2 derart gewählt ist, dass eine Gesamtanzahl von Antrieben 2-1 des modularen Robotersystems 1 für zumindest eine Teilmenge der mindestens zwei Robotereinheiten 2 minimiert ist.

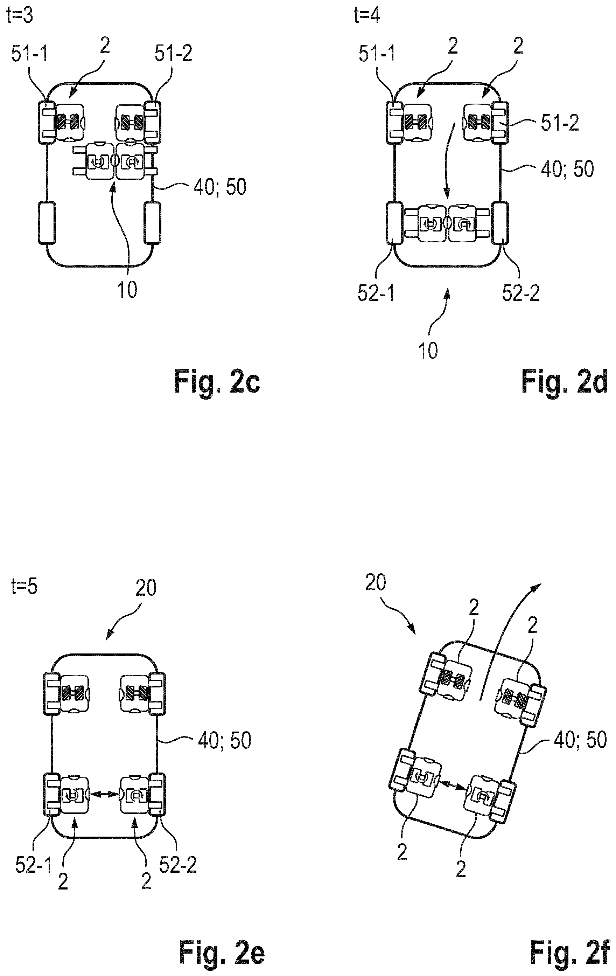

Dies ist schematisch in den Figuren 2a bis 2f verdeutlicht, in denen ein Ablauf beim Aufladen eines Fahrzeugs 50 (entspricht einem zu transportierenden Objekt 40) gezeigt ist. Die Robotersystem-Einheit 10 aus den miteinander gekoppelten Robotereinheiten, die wie die in der Fig. 1 gezeigte Ausführungsform ausgebildet ist, nähert sich zu einem Zeitpunkt t = 1 dem Fahrzeug 50. Hierbei werden lediglich die in der Darstellung unten gezeigten lenkbaren Räder aktiv in Form eines Differentialantriebs angetrieben. Die Mecanum-Räder, die in der Darstellung oben gezeigt sind, laufen hingegen passiv mit. Grundsätzlich können die Antriebe aber auch anders angeordnet und/oder ausgebildet sein. Hierbei steuern und/oder regeln die Steuereinrichtungen der Robotereinheiten die Robotersystem-Einheit 10 im Verbund miteinander (Fig. 2a). Die Robotersystem-Einheit 10 wird an ein Vorderrad 51-1 des Fahrzeugs 50 angeordnet, welches als Verbindungsposition vorgegeben ist, sodass die Verbindungsmittel in Form von Gabeln der oben links dargestellten Robotereinheit unter dieses Vorderrad 51-1 greifen können (Zeitpunkt t = 2, Fig. 2b). Die mit dem Vorderrad 51-1 verbundene Robotereinheit 2 wird von der Robotersystem-Einheit 10 abgekoppelt und verbleibt an dem Vorderrad 51-1, während die verbleibende Robotersystem-Einheit 10 auf das gegenüberliegende Vorderrad 51-2 zu bewegt wird, bis die oben rechts dargestellte Robotereinheit 2 unter das gegenüberliegende Vorderrad 51-2 greift (Zeitpunkt t = 3, Fig. 2c). Die Robotereinheit 2 verbleibt an dem Vorderrad 51-2 während die restliche Robotersystem-Einheit 10 zwischen die Hinterräder 52-1, 52-2 bewegt wird (Zeitpunkt t = 4, Fig. 2d). Die Robotersystem-Einheit 10 wird durch Entkoppeln der verbleibenden Robotereinheiten 2 gelöst und die Robotereinheiten 2 bewegen sich auf die Hinterräder 52-1, 52-2 zu und unterfassen diese zum Ausbilden der Verbindung mit dem Fahrzeug 50 mittels der Gabeln (Zeitpunkt t = 5). Sind alle Robotereinheiten mit dem Fahrzeug 50 verbunden, bilden die Robotereinheiten 2 und das Fahrzeug 50 zusammen eine Roboter-Objekt-Einheit 20 aus. Das Fahrzeug 50 wird hierzu durch Hebeeinrichtungen der Robotereinheit 2 angehoben. Entsprechend stellen die Steuereinrichtungen das Steuern und/oder Regeln auf die Roboter-Objekt-Einheit 20 um. In der gezeigten beispielhaften Ausführungsform der Robotereinheiten 2, bei dem die Robotereinheiten 2 an den Vorderrädern 51-1, 51-2 als Antriebe jeweils Mecanum-Räder und die Robotereinheiten 2 an den Hinterrädern 52-1, 52-2 jeweils lenkbare Räder aufweisen, kann die Roboter-Objekt-Einheit 20 von den Steuereinrichtungen beispielsweise im Wege einer Differentiallenkung gelenkt werden, wobei eine Lenkung der lenkbaren Räder fixiert gehalten wird (Fig. 2f).

Das Fahrzeug 50 wird nun zusammen mit den Robotereinheiten in Form der Roboter-Objekt-Einheit 20 von einer Startposition zu einer Zielposition transportiert, wobei das autonome Transportieren in an sich bekannter Weise erfolgt (Umfelderfassung mittels der Sensoriken der Robotereinheiten, Bestimmen einer Trajektorie für die Roboter-Objekt-Einheit 20, Abfahren der Trajektorie etc.).

An der Zielposition wird das Fahrzeug 50 wieder abgeladen, wobei hierzu die Reihenfolge, die beim Verbinden mit dem Fahrzeug 50 befolgt wurde, in umgekehrter Reihenfolge beim Lösen der Verbindungen und beim Koppeln der Robotereinheiten 2 befolgt wird. Anschließend wird die erneut ausgebildete Robotersystem-Einheit 10 von dem Fahrzeug 50 entfernt und kann für weitere Transportaufgaben verwendet werden.

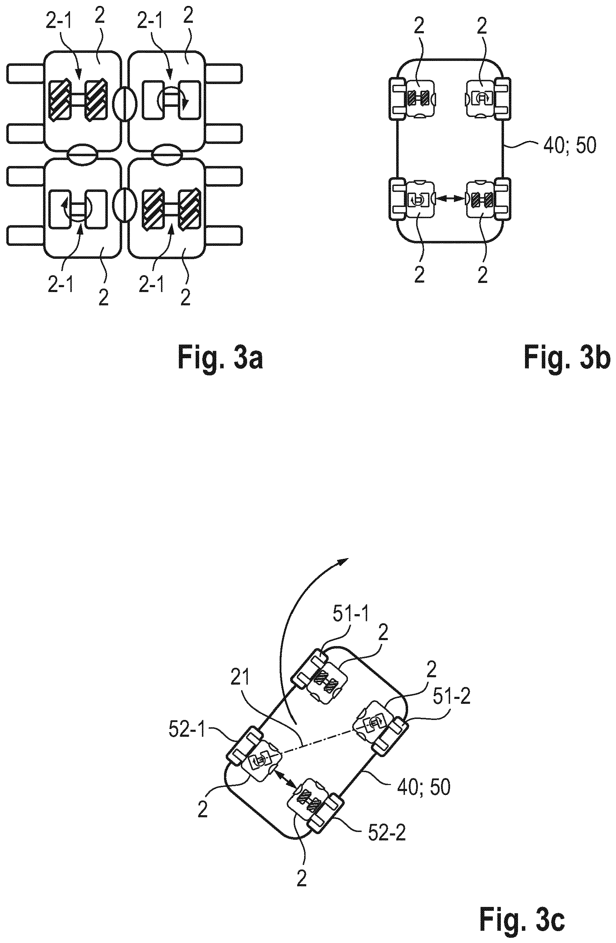

Eine Alternative zu der in den Figuren 2a bis 2f gezeigten Ausführungsform ist die in den Figuren 3a bis 3c schematisch gezeigte Ausführungsform. Die Robotereinheiten 2 in der Robotersystem-Einheit 10 sind hierbei grundsätzlich die gleichen, nur eine Anordnung der Robotereinheiten 2 ist in Bezug auf die Antriebe 2-1 bzw. Antriebsarten eine andere. Entsprechend sind auch die Koppelmittel an jeweils anderen Positionen angeordnet. Diagonal einander gegenüber sind Mecanum-Räder und lenkbare Räder als Antriebe 2-1 vorgesehen. Die Robotereinheiten 2 werden entsprechend, wie mit Bezug auf die Figuren 2a bis 2f bereits beschrieben, an die Räder 51-x, 52-x des Fahrzeugs 50 angeordnet (Fig. 3b). Durch die geänderte Anordnung der Robotereinheiten 2 kann neben einer Differentiallenkung wie im vorangegangenen Ausführungsbeispiel auch eine virtuelle Achse 21 der Roboter-Objekt-Einheit 20 definiert werden (Fig. 3c), indem die lenkbaren Räder entsprechend angesteuert werden. Dies ermöglicht es, die Roboter-Objekt-Einheit 20 in anderer Weise zu transportieren als dies in der vorangegangen Ausführungsform möglich gewesen wäre. Insbesondere kann im gezeigten Beispiel durch die virtuelle Achse 21 eine Stabilität erhöht werden, da die virtuelle Achse 21 eine größere Ausdehnung hat als ein Abstand zwischen den Rädern 51-x bzw. 52-x.

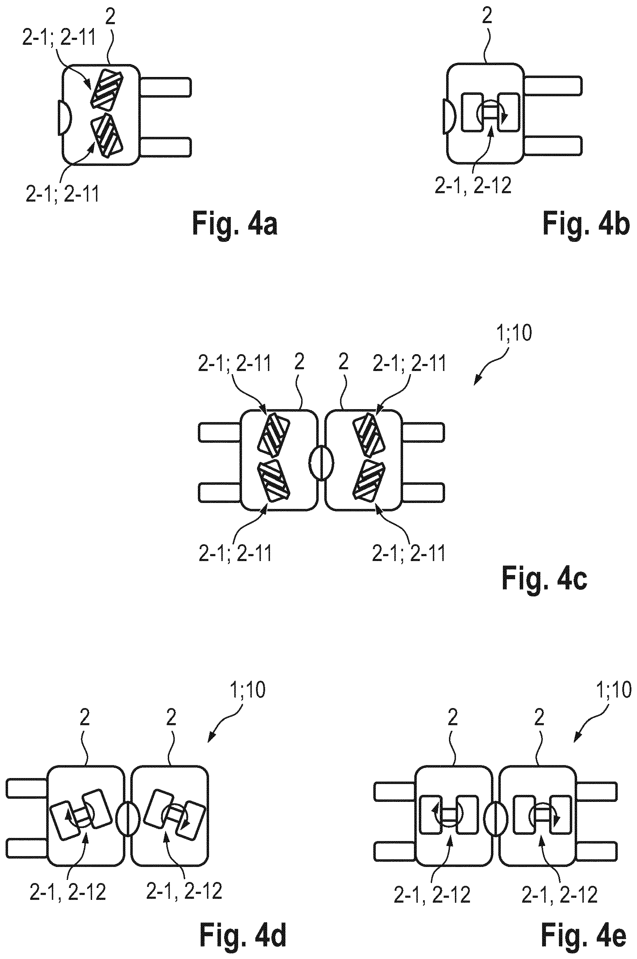

In den Figuren 4a und 4b sind schematische Darstellungen von Robotereinheiten 2 mit unterschiedlichen kinematischen Eigenschaften gezeigt. Hierbei unterscheiden sich die Antriebe 2-1 voneinander.

Die in der Fig. 4a gezeigte Robotereinheit 2 umfasst zwei aktiv angetriebene Mecanum-Räder 2-11. Durch Kombination von zweien solcher Robotereinheiten 2 kann eine omnidirektionale bzw. holonome Robotersystem-Einheit 10 ausgebildet werden, wie diese schematisch in der Fig. 4c gezeigt ist.

Die in der Fig. 4b gezeigte Robotereinheit 2 umfasst zwei aktiv angetriebene lenkbare Räder 2-12. Durch Kombination von zweien solcher Robotereinheiten 2 kann entweder eine Robotersystem-Einheit 10 mit Allradlenkung ausgebildet werden, wie diese schematisch in der Fig. 4d gezeigt ist, oder eine Robotersystem-Einheit 10 mit einer Differentiallenkung, wie diese schematisch in der Fig. 4e gezeigt ist, bei der die Räder 2-12 nicht gelenkt werden.

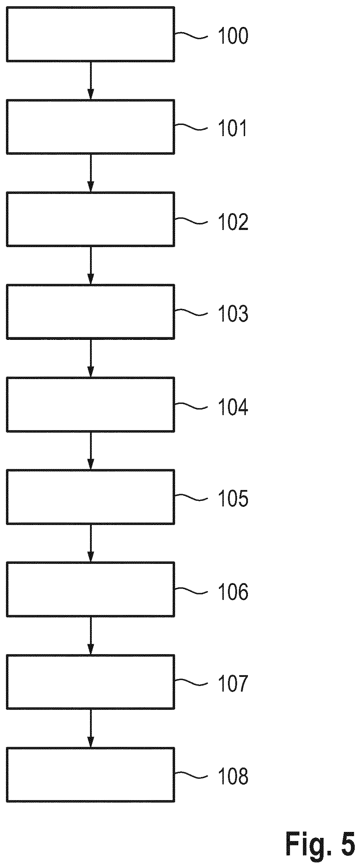

In der Fig. 5 ist ein schematisches Ablaufdiagramm einer Ausführungsform des Verfahrens zum Transportieren eines Objektes gezeigt.

Das Verfahren wird beispielsweise mittels eines modularen Robotersystems ausgeführt, wie es in der Fig. 1 dargestellt ist. Beispielsweise wird das Verfahren mit einem Fahrzeug als Objekt ausgeführt, wie dies beispielhaft in den Figuren 2a bis 2f erläutert ist.

In einer Maßnahme 100 werden mindestens zwei autonome Robotereinheiten über Koppelmittel miteinander zu einer Robotersystem-Einheit gekoppelt. Es kann insbesondere vorgesehen sein, dass die mindestens zwei autonomen Robotereinheiten zum Transportieren des Objektes in Abhängigkeit von Eigenschaften des Objektes und/oder von Eigenschaften eines Transportwegs ausgewählt und/oder angeordnet werden.

In einer Maßnahme 101 werden die Steuereinrichtungen der mindestens zwei autonomen Robotereinheiten von einem Steuern und/oder Regeln der einzelnen autonomen Robotereinheiten auf das Steuern und/oder Regeln der durch Maßnahme 100 ausgebildeten Robotersystem-Einheit umgestellt.

In einer Maßnahme 102 werden die mindestens zwei autonomen Robotereinheiten als Robotersystem-Einheit mittels Antrieben der mindestens zwei mobilen Robotereinheiten automatisiert zu dem Objekt, insbesondere zu dem Fahrzeug, gefahren.

In einer Maßnahme 103 werden die mindestens zwei mobilen Robotereinheiten nach einer vorgegebenen Reihenfolge jeweils mittels mindestens eines Verbindungsmittels an vorgegebenen Verbindungspositionen mit dem Objekt, insbesondere mit dem Fahrzeug, verbunden, wobei hierzu die Robotersystem-Einheit durch Entkoppeln der autonomen Robotereinheiten aufgelöst wird. Im Beispiel des Fahrzeugs wird je eine von vier autonomen Robotereinheiten (oder mehr, wenn das Fahrzeug mehr als vier Räder aufweist) in einer vorgegebenen Reihenfolge an einem Rad des Fahrzeugs angeordnet und mit diesem verbunden. Das Verbindungsmittel ist in diesem Fall insbesondere ein Paar aus Gabeln, welche das Rad unterfassen und anheben können, beispielsweise mittels einer zugehörigen Hebeeinrichtung.

In einer Maßnahme 104 werden die Steuereinrichtungen der mindestens zwei autonomen Robotereinheiten von einem Steuern und/oder Regeln der Robotersystem-Einheit bzw. der einzelnen Robotereinheiten auf das Steuern und/oder Regeln einer durch Maßnahme 103 ausgebildeten Roboter-Objekt-Einheit umgestellt.

In einer Maßnahme 105 wird eine hierdurch ausgebildete Roboter-Objekt-Einheit automatisiert an einen Zielort gefahren. Dies erfolgt in Bezug auf eine Umfelderfassung, eine Umfelderkennung und eine Navigation in an sich bekannter Weise.

Am Zielort angelangt, werden in einer Maßnahme 106 die Verbindungen der mindestens zwei autonomen Robotereinheiten zum Objekt, insbesondere zum Fahrzeug, unter Berücksichtigung der vorgegebenen Reihenfolge, insbesondere in umgekehrter Reihenfolge, wieder gelöst und die mindestens zwei autonomen Robotereinheiten werden wieder zur Robotersystem-Einheit gekoppelt.

In einer Maßnahme 107 werden die Steuereinrichtungen der mindestens zwei autonomen Robotereinheiten von einem Steuern und/oder Regeln der Roboter-Objekt-Einheit bzw. der einzelnen Robotereinheiten auf das Steuern und/oder Regeln der durch Maßnahme 106 wieder ausgebildeten Robotersystem-Einheit umgestellt.

In einer Maßnahme 108 wird die Robotersystem-Einheit von dem Objekt weg gefahren und kann für eine weitere Transportaufgabe verwendet werden.

### Bezugszeichenliste

- 1: Modulares Robotersystem
- 2: autonome Robotereinheit
- 2-1: Antrieb
- 2-11: Mecanum-Rad
- 2-12: lenkbares Rad
- 2-2: Verbindungsmittel
- 2-3: Koppelmittel
- 2-4: Steuereinrichtung
- 10: Robotersystem-Einheit
- 20: Roboter-Objekt-Einheit
- 21: virtuelle Achse
- 40: Objekt
- 50: Fahrzeug
- 51-x: Vorderrad
- 52-x: Hinterrad
- 100-108: Maßnahme des Verfahrens

## Patentansprüche

1. Modulares Robotersystem (1) zum Transportieren eines Objektes (40), umfassend:
mindestens zwei autonome Robotereinheiten (2),
wobei die mindestens zwei autonomen Robotereinheiten (2) jeweils mindestens einen Antrieb (2-1) und mindestens ein Verbindungsmittel (2-2) zum Verbinden mit dem Objekt (40) aufweisen,
wobei die mindestens zwei autonomen Robotereinheiten (2) ferner jeweils mindestens ein Koppelmittel (2-3) aufweisen, mit denen die mindestens zwei autonomen Robotereinheiten (2) mit zumindest einer anderen autonomen Robotereinheit (2) gekoppelt werden können, um eine Robotersystem-Einheit (10) auszubilden, und
wobei Steuereinrichtungen (2-4) der mindestens zwei autonomen Robotereinheiten (2) dazu eingerichtet sind, sich nach Bedarf alleine oder im Verbund mit anderen Steuereinrichtungen (2-4) auf das Steuern und/oder Regeln einer nicht gekoppelten und/oder nicht verbundenen Robotereinheit (2) oder der ausgebildeten Robotersystem-Einheit (10) oder einer nach Verbinden mit dem Objekt (40) ausgebildeten Roboter-Objekt-Einheit (20) umzustellen, und hierzu eine Steuer- und/oder Regelstrategie umzustellen,
wobei die Steuereinrichtungen (2-4) ferner dazu eingerichtet sind, die Robotereinheiten (2) zum Transportieren des Objektes (40) derart anzusteuern und/oder zu regeln, dass in Bezug auf eine ausgebildete Robotersystem-Einheit (10) das Ausbilden und Lösen von Kopplungen der Robotereinheiten (2) untereinander und das Ausbilden und Lösen von Verbindungen der jeweiligen Robotereinheiten (2) mit dem Objekt (40) an vorgegebenen Verbindungspositionen nach einer vorgegebenen Reihenfolge erfolgt,
**dadurch gekennzeichnet, dass**
die mindestens zwei autonomen Robotereinheiten (2) sich zumindest gruppenweise in mindestens einer kinematischen Eigenschaft voneinander unterscheiden, und
die mindestens eine kinematische Eigenschaft eine Antriebsart (2-1) des mindestens einen Antriebs (2-1) der mindestens zwei autonomen Robotereinheiten (2) umfasst.

2. Modulares Robotersystem (1) nach Anspruch 1, **dadurch gekennzeichnet, dass** die vorgegebene Reihenfolge unter Berücksichtigung von kinematischen Eigenschaften der jeweiligen Antriebe (2-1) der mindestens zwei autonomen Robotereinheiten (2) festgelegt ist.

3. Modulares Robotersystem (1) nach einem der vorangegangenen Ansprüche, **dadurch gekennzeichnet, dass** die Reihenfolge derart vorgegeben ist und/oder mindestens eine kinematische Eigenschaft der mindestens zwei autonomen Robotereinheiten (2) derart gewählt ist, dass eine Gesamtanzahl von Antrieben (2-1) des modularen Robotersystems (1) für zumindest eine Teilmenge der mindestens zwei Robotereinheiten (2) minimiert ist.

4. Modulares Robotersystem (1) nach einem der vorangegangenen Ansprüche, **dadurch gekennzeichnet, dass** das Objekt (40) ein Fahrzeug (50) ist, wobei die Steuereinrichtungen (2-4) dazu eingerichtet sind, die autonomen Robotereinheiten (2) ausgehend von der Robotersystem-Einheit (10) in der vorgegebenen Reihenfolge mit den Rädern (51-x,52-x) des Fahrzeugs (50) zu verbinden.

5. Verfahren zum Transportieren eines Objektes (40),
wobei mindestens zwei autonome Robotereinheiten (2) eines modularen Robotersystems (1) mittels Antrieben (2-1) der mindestens zwei mobilen Robotereinheiten (2) automatisiert zu dem Objekt (40) gefahren werden,
wobei die mindestens zwei autonomen Robotereinheiten (2) hierzu über Koppelmittel (2-3) miteinander zu einer Robotersystem-Einheit (10) gekoppelt sind oder gekoppelt werden,
wobei die mindestens zwei mobilen Robotereinheiten (2) nach einer vorgegebenen Reihenfolge jeweils mittels mindestens eines Verbindungsmittels (2-2) an vorgegebenen Verbindungspositionen mit dem Objekt (40) verbunden werden,
wobei eine hierdurch ausgebildete Roboter-Objekt-Einheit (20) automatisiert an einen Zielort gefahren wird,
wobei die Verbindungen der mindestens zwei autonomen Robotereinheiten (2) zum Objekt (40) am Zielort unter Berücksichtigung der vorgegebenen Reihenfolge wieder gelöst werden und die mindestens zwei autonomen Robotereinheiten (2) wieder zur Robotersystem-Einheit (10) gekoppelt werden,
wobei die Robotersystem-Einheit (10) von dem Objekt (40) weg gefahren wird, und wobei Steuereinrichtungen (2-4) der mindestens zwei autonomen Robotereinheiten (2) nach Bedarf alleine oder im Verbund mit anderen Steuereinrichtungen (2-4) auf das Steuern und/oder Regeln der nicht gekoppelten und/oder nicht verbundenen Robotereinheiten (2) oder einer ausgebildeten Robotersystem-Einheit (10) oder einer nach Verbinden mit dem Objekt (40) ausgebildeten Roboter-Objekt-Einheit (20) umgestellt werden,
**dadurch gekennzeichnet, dass**
die mindestens zwei autonomen Robotereinheiten (2) sich zumindest gruppenweise in mindestens einer kinematischen Eigenschaft voneinander unterscheiden, und
die mindestens eine kinematische Eigenschaft eine Antriebsart (2-1) des mindestens einen Antriebs (2-1) der mindestens zwei autonomen Robotereinheiten (2) umfasst.

6. Verfahren nach Anspruch 5, **dadurch gekennzeichnet, dass** die mindestens zwei autonomen Robotereinheiten (2) zum Transportieren des Objektes (40) in Abhängigkeit von Eigenschaften des Objektes (40) und/oder von Eigenschaften eines Transportwegs ausgewählt und/oder angeordnet werden.

7. Verfahren nach Anspruch 5 oder 6, **dadurch gekennzeichnet, dass** die vorgegebene Reihenfolge unter Berücksichtigung von kinematischen Eigenschaften der jeweiligen Antriebe (2-1) der mindestens zwei autonomen Robotereinheiten (2) vorgegeben ist oder vorgegeben wird.

## Claims

1. Modular robot system (1) for transporting an object (40), comprising:
at least two autonomous robot units (2),
the at least two autonomous robot units (2) each having at least one drive (2-1) and at least one connecting means (2-2) for connecting to the object (40),
the at least two autonomous robot units (2) each further having at least one coupling means (2-3) using which the at least two autonomous robot units (2) can be coupled to at least one other autonomous robot unit (2) to form a robot system unit (10), and
control devices (2-4) of the at least two autonomous robot units (2) being configured to be adapted, as required, alone or in conjunction with other control devices (2-4), for controlling and/or regulating an uncoupled and/or unconnected robot unit (2) or the formed robot system unit (10) or a robot-object unit (20) which is formed after connecting to the object (40), and to adapt a control and/or regulation strategy for this purpose,
the control devices (2-4) being further configured to control and/or regulate the robot units (2) for transporting the object (40) in such a way that, with respect to a configured robot system unit (10), the forming and releasing of couplings between the robot units (2) and the forming and releasing of connections between the respective robot units (2) and the object (40) at specified connection positions takes place according to a specified sequence, **characterized in that** the at least two autonomous robot units (2) differ from one another at least in groups in at least one kinematic property, and
the at least one kinematic property comprises a drive type (2-1) of the at least one drive (2-1) of the at least two autonomous robot units (2).

2. Modular robot system (1) according to claim 1, **characterized in that** the specified sequence is determined taking into account kinematic properties of the respective drives (2-1) of the at least two autonomous robot units (2).

3. Modular robot system (1) according to either of the preceding claims, **characterized in that** the sequence is specified in such a way and/or at least one kinematic property of the at least two autonomous robot units (2) is selected in such a way that a total number of drives (2-1) of the modular robot system (1) is minimized for at least a subset of the at least two robot units (2).

4. Modular robot system (1) according to any of the preceding claims, **characterized in that** the object (40) is a vehicle (50), the control devices (2-4) being configured to connect the autonomous robot units (2), starting from the robot system unit (10), to the wheels (51-x,52-x) of the vehicle (50) in the specified sequence.

5. Method for transporting an object (40),
at least two autonomous robot units (2) of a modular robot system (1) being automatically driven to the object (40) by means of drives (2-1) of the at least two movable robot units (2),
the at least two autonomous robot units (2) being coupled to one another via coupling means (2-3) to form a robot system unit (10),
the at least two movable robot units (2) each being connected to the object (40) at specified connection positions in a specified sequence by means of at least one connecting means (2-2),
with a robot-object unit (20) designed in this way being automatically driven to a destination,
the connections of the at least two autonomous robot units (2) to the object (40) being disconnected again at the destination taking into account the specified sequence and the at least two autonomous robot units (2) being coupled again to the robot system unit (10),
the robot system unit (10) being driven away from the object (40), and
control devices (2-4) of the at least two autonomous robot units (2) being adapted, as required, alone or in conjunction with other control devices (2-4), for controlling and/or regulating the uncoupled and/or unconnected robot units (2) or a formed robot system unit (10) or a robot-object unit (20) which is formed after connecting to the object (40),
**characterized in that**
the at least two autonomous robot units (2) differ from one another at least in groups in at least one kinematic property, and
the at least one kinematic property comprises a drive type (2-1) of the at least one drive (2-1) of the at least two autonomous robot units (2).

6. Method according to claim 5, **characterized in that** the at least two autonomous robot units (2) for transporting the object (40) are selected and/or arranged on the basis of properties of the object (40) and/or properties of a transport route.

7. Method according to claim 5 or 6, **characterized in that** the specified sequence is specified taking into account kinematic properties of the respective drives (2-1) of the at least two autonomous robot units (2).

## Revendications

1. Système robotique modulaire (1) pour transporter un objet (40), comprenant :
au moins deux unités robotiques (2) autonomes,
dans lequel les au moins deux unités robotiques (2) autonomes présentent chacune au moins un entraînement (2-1) et au moins un moyen de connexion (2-2) pour la connexion à l'objet (40),
dans lequel les au moins deux unités robotiques (2) autonomes présentent en outre respectivement au moins un moyen de couplage (2-3) avec lequel les au moins deux unités robotiques (2) autonomes peuvent être couplées à au moins une autre unité robotique (2) autonome afin de former une unité de système robotique (10), et
dans lequel des dispositifs de commande (2-4) des au moins deux unités robotiques (2) autonomes sont conçus pour se convertir, selon les besoins, seuls ou en association avec d'autres dispositifs de commande (2-4), à la commande et/ou à la régulation d'une unité robotique (2) non couplée et/ou non connectée ou de l'unité de système robotique (10) formée ou d'une unité de robot-objet (20) formée après connexion à l'objet (40), et pour convertir à cet effet une stratégie de commande et/ou de régulation,
dans lequel les dispositifs de commande (2-4) sont en outre conçus pour commander et/ou réguler les unités robotiques (2) pour le transport de l'objet (40) de telle sorte que, par rapport à une unité de système robotique (10) formée, la formation et la libération de couplages des unités robotiques (2) entre elles et la formation et la libération de connexions des unités robotiques (2) respectives avec l'objet (40) s'effectuent à des positions de connexion prédéfinies selon une séquence prédéfinie, **caractérisé en ce que** les au moins deux unités robotiques (2) autonomes se distinguent les unes des autres au moins par groupe dans au moins une propriété cinématique, et
l'au moins une propriété cinématique comprend un mode d'entraînement (2-1) de l'au moins un entraînement (2-1) des au moins deux unités robotiques (2) autonomes.

2. Système robotique modulaire (1) selon la revendication 1, **caractérisé en ce que** la séquence prédéfinie est établie en tenant compte des propriétés cinématiques des entraînements (2-1) respectifs des au moins deux unités robotiques (2) autonomes.

3. Système robotique modulaire (1) selon l'une des revendications précédentes, **caractérisé en ce que** la séquence est prédéfinie et/ou au moins une propriété cinématique des au moins deux unités robotiques (2) autonomes est choisie de telle sorte qu'un nombre total d'entraînements (2-1) du système robotique modulaire (1) est minimisé pour au moins un sous-ensemble des au moins deux unités robotiques (2).

4. Système robotique modulaire (1) selon l'une des revendications précédentes, **caractérisé en ce que** l'objet (40) est un véhicule (50), dans lequel les dispositifs de commande (2-4) sont conçus pour connecter les unités robotiques (2) autonomes aux roues (51-x, 52-x) du véhicule (50) à partir de l'unité de système robotique (10) dans la séquence prédéfinie.

5. Procédé de transport d'un objet (40),
dans lequel au moins deux unités robotiques (2) autonomes d'un système robotique modulaire (1) sont déplacées de manière automatisée vers l'objet (40) par le biais d'entraînements (2-1) des au moins deux unités robotiques (2) mobiles,
dans lequel les au moins deux unités robotiques (2) autonomes sont ou seront à cet effet couplées entre elles par l'intermédiaire de moyens de couplage (2-3) pour former une unité de système robotique (10),
dans lequel les au moins deux unités robotiques (2) mobiles sont connectées à l'objet (40) selon une séquence prédéfinie respectivement par le biais d'au moins un moyen de connexion (2-2) à des positions de connexion prédéfinies,
dans lequel une unité robot-objet (20) ainsi formée est conduite de manière automatisée à un emplacement cible,
dans lequel les connexions des au moins deux unités robotiques (2) autonomes avec l'objet (40) à l'emplacement cible sont à nouveau rompues en tenant compte de la séquence prédéfinie et les au moins deux unités robotiques (2) autonomes sont à nouveau couplées à l'unité de système robotique (10),
dans lequel l'unité de système robotique (10) est conduite à l'écart de l'objet (40), et
dans lequel des dispositifs de commande (2-4) des au moins deux unités robotiques (2) autonomes sont convertis, selon les besoins, seuls ou en association avec d'autres dispositifs de commande (2-4), pour commander et/ou réguler les unités robotiques (2) non couplées et/ou non connectées ou une unité de système robotique (10) formée ou une unité robot-objet (20) formée après connexion à l'objet (40), **caractérisé en ce que** les au moins deux unités robotiques (2) autonomes se distinguent les unes des autres, au moins par groupe, par au moins une propriété cinématique, et
l'au moins une propriété cinématique comprend un mode d'entraînement (2-1) de l'au moins un entraînement (2-1) des au moins deux unités robotiques (2) autonomes.

6. Procédé selon la revendication 5, **caractérisé en ce que** les au moins deux unités robotiques (2) autonomes pour transporter l'objet (40) sont sélectionnées et/ou agencées en fonction de propriétés de l'objet (40) et/ou de propriétés d'un trajet de transport.

7. Procédé selon la revendication 5 ou 6, **caractérisé en ce que** la séquence prédéfinie est ou sera prédéfinie en tenant compte des propriétés cinématiques des entraînements (2-1) respectifs des au moins deux unités robotiques (2) autonomes.
